# EUROPEAN PATENT APPLICATION

(11) **EP 2 860 209 A1**
(43) Date of publication of application: **15.04.2015**
(21) Application number: 13188569.1
(22) Date of filing: 14.10.2013
(51) Int. Cl.: C08G 18/64, C08G 18/40

(54) **Process for the preparation of biopolymer compositions**

(71) Applicant: Solvay SA, 1120 Bruxelles (BE)
(72) Inventor: The designation of the inventor has not yet been filed
(74) Representative: Mross, Stefan P.M.

(57) **Abstract**

Processes for the preparation of compositions comprising phenolic biopolymers and a liquid medium, especially compositions comprising a polyol in the liquid medium wherein the compositions are prepared using a mill with a solid grinding medium not permanently connected to the mill are disclosed.

## Description

The present invention relates to processes for the preparation of compositions comprising phenolic biopolymers and a liquid medium, especially compositions comprising a polyol in a liquid medium wherein the compositions are prepared using a mill with a solid grinding medium not permanently connected to the mill. The invention further relates to processes for the preparation of polyurethane foams and premixes for the preparation of said polyurethane foams.

Phenolic biopolymers such as lignin can be extracted from natural resources such as straw and especially from wood. In the polyurethane business, the use of phenolic biopolymers has been described. WO 86/07070 describes the use of lignin as a reaction component for producing polyurethanes.

However, the production process described therein makes use of an organic solvent to dissolve the lignin and the other components used for the production of the polyurethane.

Now therefore, the invention makes available an improved process for the preparation of compositions comprising phenolic biopolymers and a liquid medium wherein said liquid medium comprises a polyol. It is an objective of the present invention to provide a process which is safer, more economical and/or more ecological. It is another objective of the present invention to provide a process for the preparation of a composition and/or a composition as such with improved characteristics, e.g. with improved stability, flammability, homogeneity, processability, particle size and/or particle size distribution.

This objective and other objectives are achieved by the invention as outlined in the patent claims.

Accordingly, one aspect of the present invention concerns a process for the preparation of a composition comprising a phenolic biopolymer and a liquid medium, said liquid medium comprising a polyol; using a mill wherein a mixture of the phenolic biopolymer, the liquid medium and a solid grinding medium not permanently connected to the mill is agitated in the mill.

The term "phenolic biopolymer" is intended to comprise a phenolic biopolymer of a single defined chemical structure as well as a mixture of phenolic biopolymers of different chemical structures. The term is intended to denote a polymer originating from a biological source comprising at least one phenol moiety. Suitable examples of phenolic biopolymers include phenolic acids, flavonoids, stilbenes, lignans and especially lignin. Lignin is commonly derived from wood and is removed from the wood during the pulping process for the production of high-quality paper. Suitably, the lignin can be removed from the pulp via the Kraft process yielding Kraft lignin. Accordingly, in a preferred embodiment the phenolic biopolymer is lignin, more preferably Kraft lignin. The lignin used herein can also be produced from natural sources which are processed in biorefineries.

The term "liquid medium" is intended to denote a medium which is in the liquid state under the conditions used in the inventive process.

The term "polyol" is intended to denote a compound containing more than one hydroxyl group in the structure, e.g. the compound may contain 2, 3, or 4 hydroxyl groups and is intended to comprise a polyol of a single defined chemical structure as well as a mixture of polyols of different chemical structures. Preferred are synthetic polyols. Also preferred are polymeric polyols, more preferably polyester or polyether polyols. Suitable examples for polyester polyols include polycaprolactone diol and diethylene glycol terephthalate. Suitable examples of polyether polyols include polyethylene glycol, e.g. PEG 400, polypropylene glycol and poly(tetramethylene ether) glycol. Most preferred are brominated polyether glycols, e.g. polyetherpolyol B 350 (CAS-No.: 68441-62-3). Especially suitable is the mixture of polyetherpolyol B 350 and triethyl phosphate, which can be obtained under the brand name IXOL® B 251 from Solvay. Some of said polyols are sensitive to elevated temperatures. A further advantage of the present invention is that the process can be performed at relatively low temperatures. Accordingly, the inventive process can be performed at a temperature of equal to or lower than 80 °C, preferably at a temperature of equal to or lower than 60 °C, more preferably at a temperature of equal to or lower than 40 °C. Cooling of the composition may be performed to compensate the raise in temperature that may be observed during the preparation of the composition.

Preferably, the inventive process is performed in the absence of an additional solvent. The term "additional solvent" is intended to exclude compounds that may be present in the components of the compositions by virtue of their origin, e.g. water in the phenolic biopolymer or residual organic solvents in the polyols originating from production process of the polyols. The term "additional solvent" is intended to denote solvents that are introduced in the inventive process in addition to the other components of the composition.

Also preferably, the liquid medium consists essentially of the polyol. The term "consists essentially of" is intended to denote that the liquid medium consists of the polyol as well as optionally trace amounts of further components, e.g. impurities, wherein the optional further components do not alter the essential characteristics of the liquid medium.

The choice of the means of preparation of the composition is essential to achieve the required characteristics of the inventive composition. Due to the generally low solubility of the phenolic biopolymer in the liquid medium, normal stirring of the composition is generally not sufficient, the formation of sediment is observed and the resulting composition is generally not useful for the preparation of polyurethane or modified polyurethane foams. Accordingly, the inventive process is performed using a solid grinding medium not permanently connected to the mill, which is agitated in the mill. Thus, said loose solid grinding medium is agitated together with the components of the composition to achieve a milling and/or grinding effect. Suitably, the solid grinding medium comprises hard objects made for example of flint, steel, glass or ceramic. The shape of the grinding medium may vary and can be selected for example from a sphere, an ovoid, a polyhedron, or a torus. A sphere is especially suitable.

In a preferred embodiment the mill is a ball mill. In another preferred embodiment the solid grinding medium comprises steel balls or ceramic balls.

The loose, solid grinding medium can be agitated by a stirrer. A suitable stirrer is a dissolver or a stirred ball mill (pearl mill).

Alternatively, a ball mill can be used. The term "ball mill" is intended to denote any mill using a loose, solid grinding medium in shape of a sphere. The ball mill can advantageously rotate around a horizontal axis or be actuated horizontally and/or vertically.

The inventive process allows reducing the particle size of the phenolic biopolymer and thus, improving the characteristics of the composition. Advantageously, the inventive composition has a mean particle size distribution d90 - meaning that 90% of the sample's mass is comprised of smaller particles than the given value - of equal to or below 1000 µm, preferably equal to or below 500 µm, more preferably equal to or below 200 µm, most preferably of equal to or below 100 µm of the phenolic biopolymer as measured by Laser Diffraction Particle Size Analyser (Coulter® LS 230). The sample is added to the instrument where it is added to an isopropanol medium and measured without sonication at room temperature.

The inventive process allows the use of high concentrations of the phenolic biopolymer, preferably of lignin, in the composition while still achieving favourable characteristics of the compositions, especially in terms of processability and homogeneity. Accordingly, in a preferred embodiment, the composition comprises equal to or more than 20 wt%, more preferably equal to or more than 35 wt%, and most preferably equal to or more than 45 wt% of the phenolic biopolymer.

Another aspect of the present invention concerns a composition obtained using the inventive process, preferably a composition wherein the phenolic biopolymer is a lignin and the liquid phase comprises a mixture of brominated polyether polyols.

Yet another aspect of the present invention concerns a process for the preparation of a polyurethane or modified polyurethane foam comprising the steps of supplying a composition obtained according to the inventive process for the preparation of the composition as outlined above; optionally adding at least one further component selected from the list consisting of polyester polyols, polyether polyols, a flame retardant, a foam stabilizer and a catalyst; optionally adding a blowing agent mixture and adding a isocyanate component.

The term "polyurethane" is intended to denote polymers resulting essentially from the reaction of polyols with isocyanates. These polymers are typically obtained from formulations exhibiting an isocyanate index from 100 to 180. The term "modified polyurethane" is intended to denote polymers resulting from the reaction of polyols with isocyanates that contain, in addition to urethane functional groups, other types of functional groups, in particular triisocyanuric rings formed by trimerization of isocyanates. These modified polyurethanes are normally known as polyisocyanurates. These polymers are typically obtained from formulations exhibiting an isocyanate index from 180 to 550.

Any isocyanate conventionally used to manufacture such foams can be used in the process according to the invention. Mention may be made, by way of example, of aliphatic isocyanates, such as hexamethylene diisocyanate, and aromatic isocyanates, such as tolylene diisocyanate or diphenylmethane diisocyanate.

Any flame retardant conventionally used in the manufacture of such foams can be used. Mention may be made, for example, of triethyl phosphate, trischloroisopropyl phosphate and other phosphates or phosphonates.

Suitable catalysts include compounds that catalyze the formation of the -NH-CO-O- urethane bond by reaction between a polyol and an isocyanate or that activate the reaction between an isocyanate and water, such as tertiary amines and organic tin, iron, mercury or lead compounds. Mention may in particular by made, as tertiary amines, of triethylamine, N,N-dimethylcyclohexylamine, N-methylmorpho line, N-ethylmorpho line, dimethylethanolamine, diaza[2.2.2]bicyclooctane (triethylenediamine) and substituted benzylamines, such as N,N-dimethylbenzylamine. Mention may in particular be made, as organic tin or lead compounds, of dibutyltin dilaurate, stannous octanoate and lead octanoate. Other suitable catalysts intended for the manufacture of modified polyurethane (polyisocyanurate) foams include compounds that catalyse the trimerization of isocyanates to triisocyanurates.

In practice, the amount of catalyst used generally varies from approximately 0.05 to 10 parts by weight per 100 parts by weight of polyol. In general, the amount of the composition according to the invention is from 1 to 80 parts by weight per 100 parts by weight of polyol. It is preferably from 10 to 60 parts by weight per 100 parts by weight of polyol.

Any foam stabilizer conventionally used in the manufacture of such foams can be used. Mention may be made, for example, of siloxane polyether copolymers.

Any blowing agent mixture conventionally used in the manufacture of such foams can be used. Mention may be made, for example, of 1,1,1,3,3-pentafluorobutane (HFC 365mfc), 1,1,1,2-tetrafluoroethane (HFC-134a), 1,1,1,2,3,3,3-heptafluoropropane (HFC 227ea), 1,1,1,3,3-pentafluorpropane (HFC 245fa), halogenated olefins like HFO-1234yf, HFO-1234zr and HFO-1233zd, or mixtures of said alkanes and alkenes. Preferred are mixtures of HFC 365mfc and HFC 245fa, especially a mixture of 70:30 of HFC 365mfc and HFC 245fa and mixtures of HFC 365mfc and HFC 227ea, especially the mixtures of 93:07 or 87:13 of HFC 365mfc and HFC 227ea.

Preferably, the process for the preparation of a polyurethane or a modified polyurethane foam according to the invention is carried out in the presence of water. In this case, the amount of water used is preferably equal to or greater than 1 part by weight (pbw) per 100 parts of polyol. More preferably, the amount of water used equal to or greater than 1.5 parts by weight per 100 parts of polyol. In this case the amount of water used is preferably equal to or less than 2.5 parts by weight per 100 parts of polyol. More preferably, the amount of water used equal to or less than 2 parts by weight per 100 parts of polyol. Also preferably, the process for the preparation of a polyurethane or a modified polyurethane foam according to the invention is carried out in the presence of small amounts of water and the amount of water used is 0.01 to 12 pbw per 100 parts of polyol, more preferably the amount of water ranges from 0.01 to 4 pbw per 100 parts of polyol, even more preferably the amount of water ranges from 0.01 to 2 pbw per 100 parts of polyol.

The proportions of polyol, catalyst, the composition according to the invention and optional additives can vary, in particular according to the application, the type of foam prepared, the nature of the polyol and the nature of the catalyst.

Still another aspect of the present invention concerns a polyurethane or a modified polyurethane foam obtained using the inventive process for the preparation of a polyurethane foam as outlined above. The polyurethane or modified polyurethane foam according to the invention is preferably a rigid closed-cell foam. The polyurethane or modified polyurethane foam can also be selected from a flexible or semi-flexible foam, integral skin foam and a one-component foam.

In the process according to the invention, the composition according to the invention can be supplied to the reaction in the form of a premix. The term "premix" is intended to denote any composition comprising at least one composition according to the invention, at least one blowing agent and at least one catalyst.

Surprisingly, the compositions according to the invention are chemically stable in the premix. Consequently, the latter can optionally be formulated without a stabilizer against the potential degradation of the composition according to the invention.

Accordingly, still another aspect of the present invention concerns a premix comprising the inventive composition as outlined above and optionally at least one further component selected from the list consisting of polyester polyols, polyether polyols, a flame retardant, a foam stabilizer and a catalyst; and a blowing agent mixture.

Still another aspect of the present invention concerns a thermal insulation material comprising the inventive polyurethane foam as outlined above.

Specific examples of thermal insulation materials according to the invention include insulation panels, tubes for pipe insulation, sandwich panels, laminates and block foams.

The thermal insulation material according to the invention generally substantially keeps its insulating properties when used in contact with an atmosphere having a temperature of 10°C or lower. Often the temperature of use can be 5°C or lower. The temperature can even be 0°C or lower without substantial condensation. The thermal insulation material according to the invention is particularly suitable when used in contact with an atmosphere having a temperature of -10°C or higher.

The examples hereafter are intended to illustrate the invention in a non-limitative manner.

### Examples:

### Example 1: Preparation of a composition

To a 1-1 glass vessel adjusted to 30 °C, 280 g IXOL® B 251 (Solvay chemicals), 70 g lignin (Kraft lignin, MeadWestvaco Corporation) and 200 ml glass beads (diameter: 1-1.3 mm) were added. The mixture was agitated using a dissolver (Dissolver DISPERMAT® CN, VMA) at 10000 rpm for 15 min. The glass beads were filtered off to yield a composition with a d90 of < 200 µm *Example 2*: *Preparation of a premix*

The composition of lignin and IXOL® B 251 was mixed with the additional components by conventional means to arrive at a premix containing 13% lignin (Kraft lignin, MeadWestvaco Corporation), 11 wt% IXOL® B 251 (Solvay Chemicals), 23 wt% Voranol® RN 490 (Dow chemicals), 1 wt% Struksilon® 8006 (Schill + Seilacher "Struktol" GmbH), 6 wt% tris(2-chlorisopropyl)phosphat (TCPP), 1 wt% water, 34 wt% Stepanpol® PS 2412, 10% HFC 365mfc (Solkane® 365) and 1 wt% N,N-dimethylcyclohexylamine (DMCHA, Lupragen® N100).

### Example 3: Preparation of a polyurethane foam

A polyurethane foam was prepared by conventional means using the components as shown in the table below:

| Compound | Type | Part by weight |
|---|---|---|
| IXOL® B251 | Chemical flame retardant, polypolyether polyol | 19.0 |
| Lignin | | 22.5 |
| Stepanpol® PS2412 | Aromatic Polyester polyol | 57.0 |
| Voranol® RN490 | Polyether polyol | 38.0 |
| TCPP | Physical flame retardant | 10.5 |
| DMCHA | Amine based catalyst | 2.3 |
| Struksilon® 8006 | Surfactant | 1.5 |
| Solkane® 365 | Blowing agent (physical) | 18.4 |
| Water | Blowing agent (chemical) | 1.4 |
| Methylendiphenyldiisocyanat (MDI) | Isocyanate | 143.4 |

An MDI index of 115 was applied to prepare the polyurethane foams. The thermal conductivity measured with the polyurethane foam thus obtained is comparable to a polyurethane foam prepared in the same manner without lignin.

## Claims

1. A process for the preparation of a composition comprising a phenolic biopolymer and a liquid medium, said liquid medium comprising a polyol, using a mill wherein a mixture of the phenolic biopolymer, the liquid medium and a solid grinding medium not permanently connected to the mill is agitated in the mill.

2. The process according to claim 1 wherein the mill is a ball mill.

3. The process according to claim 1 or 2 wherein the solid grinding medium comprises steel balls, glass balls or ceramic balls.

4. The process according to any one of claims 1 to 3 wherein the process is performed in the absence of an additional solvent.

5. The process according to any one of claims 1 to 4 wherein the liquid medium consists essentially of the polyol.

6. The process according to any one of claims 1 to 5 wherein the composition is a solution, a sol, or a suspension, preferably a suspension.

7. The process according to any one of claims 1 to 6 wherein the phenolic biopolymer is a lignin, preferably a Kraft lignin.

8. The process according to any one of claims 1 to 7 wherein the liquid medium comprises a polyether polyol or a polyester polyol, preferably a polyether polyol, more preferably a mixture of brominated polyether polyols.

9. The process according to any one of claims 1 to 8 wherein the composition comprises equal to or more than 20 wt%, preferably equal to or more than 35 wt%, more preferably equal to or more than 50 wt% of the phenolic biopolymer.

10. A composition obtained using the process according to any one of the claims 1 to 9.

11. The composition according to claim 10 wherein the phenolic biopolymer is a lignin and the liquid phase comprises a mixture of brominated polyether polyols.

12. A process for the preparation of a polyurethane or a modified polyurethane foam comprising the steps of supplying a composition obtained according to the process of any one of claims 1 to 9; optionally adding at least one further component selected from the list consisting of polyester polyols, polyether polyols, a flame retardant, a foam stabilizer and a catalyst; optionally adding a blowing agent mixture and adding a isocyanate component.

13. A premix comprising the composition according to claim 10 or 11; optionally at least one further component selected from the list consisting of polyester polyols, polyether polyols, a flame retardant, a foam stabilizer and a catalyst; and a blowing agent mixture.

14. A polyurethane or modified polyurethane foam obtained using the process of claim 12.

15. A thermal insulation material comprising the foam according to claim 14.
